# EUROPEAN PATENT SPECIFICATION

(11) **EP 3 380 775 B1**
(45) Date of publication and mention of the grant of the patent: **06.11.2024**
(21) Application number: 15808511.8
(22) Date of filing: 25.11.2015
(51) Int. Cl.: F17C 1/06, F17C 1/16, F17C 11/00

(54) **COMPOSITE PRESSURE VESSEL ASSEMBLY WITH AN INTEGRATED HEATING ELEMENT**
VERBUNDDRUCKBEHÄLTERANORDNUNG MIT INTEGRIERTEM HEIZELEMENT
ENSEMBLE RÉCIPIENT SOUS PRESSION COMPOSITE À ÉLÉMENT CHAUFFANT INTÉGRÉ

(43) Date of publication of application: 03.10.2018
(73) Proprietor: RTX Corporation, Farmington, CT 06032 (US)
(72) Inventor: ZHAO, Wenping, East Hartford, Connecticut 06108 (US); VAN HASSEL, Bart Antonie, East Hartford, Connecticut 06108 (US); SUN, Ellen Y., East Hartford, Connecticut 06108 (US)
(74) Representative: Schmitt-Nilson Schraud Waibel Wohlfrom Patentanwälte Partnerschaft mbB
(86) International application number: PCT/US2015/062656
(87) International publication number: WO 2017/091223

(56) References cited:
- EP-B1- 2 363 629
- US-A- 6 095 367
- US-A1- 2009 229 555
- US-A1- 2011 240 655
- US-B2- 9 188 284

## Description

### BACKGROUND

The present disclosure relates to a pressure vessel assembly and more particularly to a pressure vessel assembly with an integrated heating element.

Pressure vessels may serve as storage media (e.g., gas) for a wide variety of consumer, commercial, and industrial processes. In order to store sufficient gas for any operation within a given volume, the gas is stored at high pressure. Traditionally, pressure vessels have a typical spherical or cylindrical design that evenly distributes stress in the containment perimeter. Unfortunately, such tanks do not use allocated space efficiently. For example, a spherical vessel fills a cubic space with about fifty-two percent efficiency, and a cylindrical vessel fills a rectangular volume with approximately seventy-eight percent efficiency. More recent improvements in pressure vessels that generally conform to a rectangular volume may fill the space with about ninety percent efficiency relative to a true rectangular volume.
US 9 188 284 B2 shows an electrical heating unit in a container facilitating release of adsorbed natural gas. The heating unit is formed of a heating rod, heating wire, or heating tape.
US 2009/0229555 A1 shows a storage tank having a plurality of briquette units inside the storage tank. Each briquette unit includes a liner of heat-conducting material. The liner includes a heat conductor, such as metal or heat conducting plastic. Heating of the briquette is achieved by letting a heat pipe or channel traverse through the briquette.
US 2011/0240655 A1 shows a vessel having an inner shell and an outer shell, wherein the outer shell is formed from a carbon fiber, a glass fiber, a composite fiber, and a fiber having a resin coating. The inner shell comprises a plurality of channels which are in fluid communication with fluid conduits, the channels forming a temperature regulating device. The channels are provided with a flow of a fluid via a temperature control system.
EP 2 363 629 A1 shows a warming system for a carbon fiber composite high pressure gas storage tank. The system comprises a resin fiber composite the tank having a shell formed from an electromagnetically active fiber material embedded in a polymeric binder; the warming system comprises a coil of conductive wire wound around the diameter of the tank interconnected with a high-frequency alternating current passed through the coil from an on board power source to produce an electromagnetic field that warms the tank by electromagnetic induction.
US 6 095 367 A shows a pressure vessel for holding a pressurized fluid such as compressed natural gas including two end cells and zero or more interior cells. The cell geometry ensures that the cells meet one another at tangential circular surfaces, thereby reducing the tendency of adjacent cells to peel apart. A web secured about the cells includes two sheets that are tangent to the cells.

An absorbent may be placed inside the pressure vessel to further improve storage efficiency of the pressurized gas. To assist in extracting the gas from the vessel, the absorbent may be heated by various means.

The designs of non-spherical/cylindrical pressure vessels to support high internal pressure are complex, including variable-curvature external surfaces and internal structure to transfer stresses. The large size of a high conformable vessels and the complicated shapes makes manufacturing challenging. Moreover, the addition of absorbents with a heating means contributes toward design and manufacturing complexity and cost.

### SUMMARY

A pressure vessel assembly according to one embodiment of the present disclosure includes the features of claim 1.

Preferred embodiments can be found in the dependent claims.

It should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a perspective view of a pressure vessel assembly configured to store a pressurized fluid according to an exemplary embodiment of the invention:

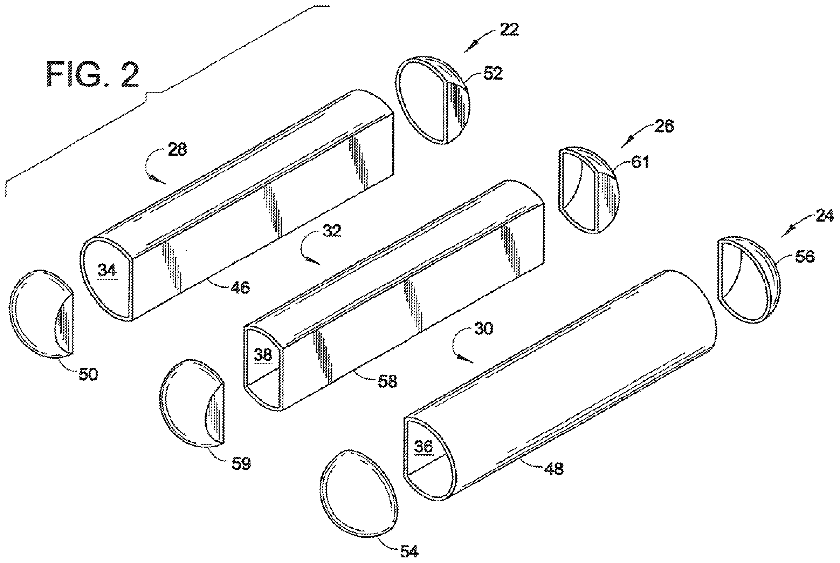

FIG. 2 is an exploded perspective view of liners of the pressure vessel assembly;
FIG. 3 is a cross section of the liners;
FIG. 4 is a perspective cross section of the liners with a mid-layer applied;
FIG. 5 is a perspective cross section of the pressure vessel assembly; and
FIG. 6 is an enlarged partial cross section taken from the circle identified as 6 in FIG. 5.

### DETAILED DESCRIPTION OF THE INVENTION

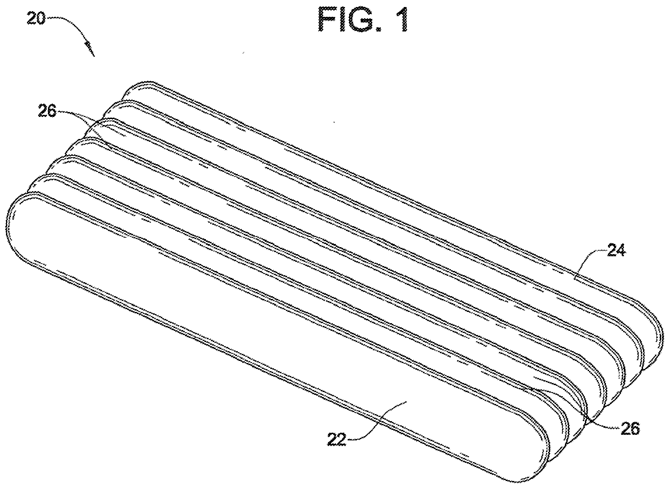

Referring now to FIG. 1, an example of a pressure vessel or tank assembly 20 configured to store a high pressure fluid is illustrated. Exemplary fluids that may be stored within the pressure vessel 20 include, but are not limited to, compressed natural gas (CNG), hydrogen, propane, methane, air, and hydraulic fluid, for example. The pressure vessel assembly 20 may generally include two flanking vessels 22, 24 and at least one interior vessel 26 (e.g., five identical interior vessels illustrated) joined to and disposed between the flanking vessels 22, 24, Each vessel 22, 24, 26 may generally be elongated with the overall configuration of the pressure vessel assembly 20 generally being a rectangular shape, but as will be appreciated from the description, herein, other shapes are contemplated.

Referring to FIG, 2, each vessel 22, 24, 26 may include respective liners 28, 30, 32. Each liner 28, 30, 32 may define the boundaries of respective chambers 34, 36, 38 for the fluid storage. The flanking end liners 28, 30 may include respective lobes 46, 48 with lobe 46 closed-off by opposite end caps 50, 52 and lobe 46 closed-off by opposite end caps 54, 56, Each lobe 46, 48 may be circumferentially continuous and substantially cylindrical. The interior liner 32 may include a lobe 58 with the lobe 58 closed-off by opposite end caps 59, 61. Lobe 58 may be circumferentially continuous. The liners 28, 30, 32 may be made of any material and thicknesses capable of providing the necessary structural support, weight, operating characteristics, cost limitations and other parameters necessary for a particular application. Examples of liner material may include steel or other metallic compositions and plastic. The liners 28, 30, 32 may further be blow molded plastic, or injection molded plastic.

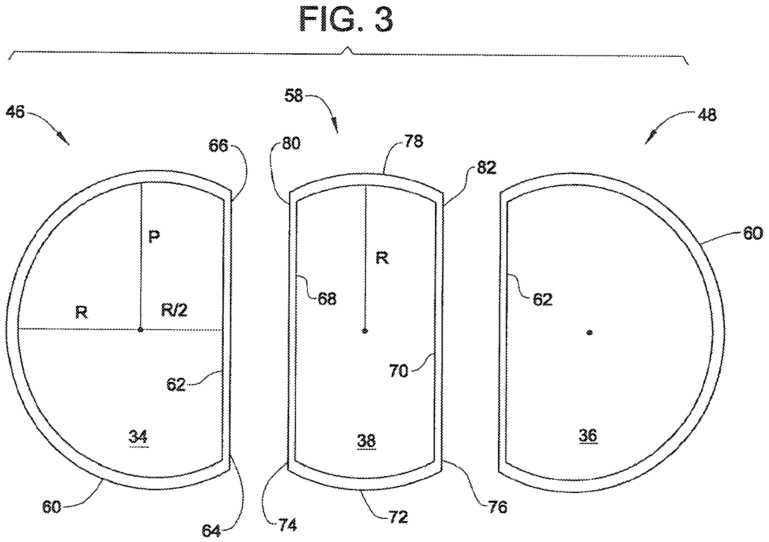

Referring to FIG. 3, the lobes 46, 48 of the respective flanking liners 28, 30 may be substantially identical and are arranged such that the lobe 46 of the first flanking liner 28 is rotated about one-hundred and eighty (180) degrees relative to the lobe 48 of the opposite flanking liner 30 (i.e., are arranged as a mirror image of one-another). Each flanking lobe 46, 48 may include a generally cylindrical outer portion or wall 60 and an interior portion or wall 62. The interior wall 62 may be substantially planar and may laterally span between a first end 64 and a second end 66 of the cylindrical outer wall 60. In one embodiment, the interior wall 62 is integrally formed with the ends 64, 66 of the cylindrical outer wall 60. At least a portion of the curvature of the cylindrical outer will 60 is defined by a radius R. in one embodiment, the portion of the outer wall 60, opposite the interior wall 62, includes a circular shape or curve generally of a two-hundred and forty (240) degree angle as defined by the radius R. Consequently, the overall height of the flanking lobes 46, 48 is equal to double the length of the radius R of the cylindrical outer wall 60. The vertical interior wall 62 is generally parallel to and spaced apart from a vertical plane P that includes the origin of the radius R that defines the curvature of the outer wall 60. In one embodiment, the distance between the interior wall 62 and the parallel vertical plane ρ is about half the length of the radius R. As a result, the flanking lobes 46, 48 generally have a width equal to about one and a half the length of the radius of curvature R of the outer wall 60.

The illustrated interior lobe 58 includes first and second interior sidewalls 68, 70 that may be diametrically opposite one another, substantially vertically arranged, and separated from one another by a distance. In one embodiment, the width of the interior lobe 58 is generally equal to the radius of curvature R of the end lobes 46, 48, The thicknesses of the first interior sidewall 68 and the second interior sidewall 70 may be identical and may be equal to the thickness of the interior wall 62 of the flanking lobes 46, 48. A first outside wall 72 extends between a first end 74 of the first interior sidewall 68 and a first end 76 of the second interior sidewall 70. Similarly, a second outside wall 78 extends between a second end 80 of the first interior sidewall 68 and a second end 82 of the second interior sidewall 70.

The curvature of the first outside wall 72 and the second outside wall 78 may be defined by a circular shape or curve generally of a sixty (60) degree angle by a radius R. In one embodiment, the radius of curvature R of the interior lobe 58 is substantially identical to the radius of curvature R of the flanking lobes 46, 48. Consequently, the distance between the first curved wall 72 and the second curved wall 78 is double the length of the radius of curvature R, and is therefore, substantially equal to the height of the flanking lobes 46, 48.

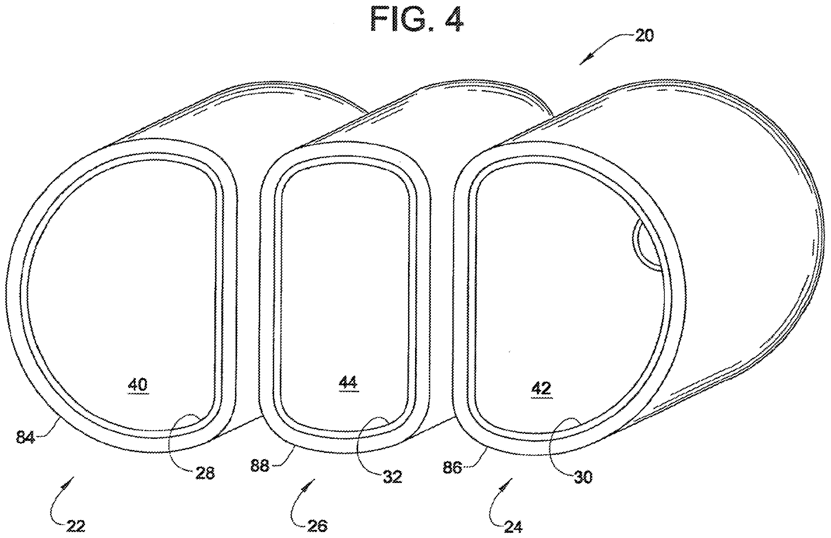

Referring to FIG. 4, the vessels 22, 24, 26 each include a mid-layer 84, 86, 88 that substantially covers the respective liners 28, 30, 32. The mid-layer 84 is a continuous fiber wrapping wrapped about the lobes and end caps of the liners for structural strength and for distributing internal stress. The primary reinforcement (i.e., the fibers), is made of a carbon fiber. A matrix material or resin for binding the continuous fibers may include epoxy, vinyl ester and other resin systems that may be nano-enhanced. It is further contemplated and understood that the mid-layers 84, 86, 88 may be made of resin impregnated fibers.

When the pressure vessel assembly 20 is at least partially assembled, the interior wall 62 of the flanking lobe 46 is opposed and in proximity to the interior sidewall 68 of the interior lobe 58. The portion of the mid-layer 84 covering the interior wall 62 may be directly adjacent and adhered to the portion of the mid-layer 88 that covers the sidewall 68 if a binder is present. Similarly, the interior wall 62 of the flanking lobe 48 is opposed and in proximity to the interior sidewall 70 of the interior lobe 58. The portion of the mid-layer 86 covering the interior wall 62 may be directly adjacent and adhered to the portion of the mid-layer 88 that covers the sidewall 70.

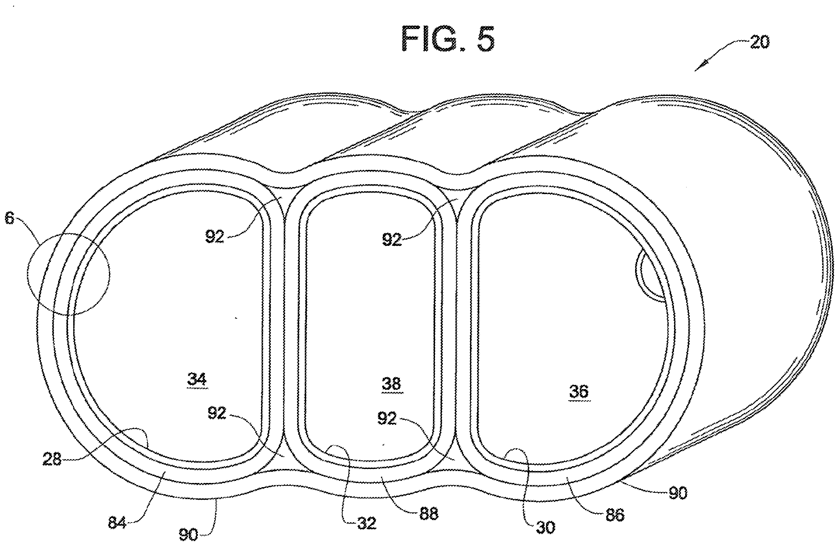

Referring to FIG. 5, the pressure vessel assembly 20 may include an outer layer 90 that generally covers and envelops the mid-layers 84, 86, 88. The outer layer 90 may be applied after the mid-layers 84, 86, 88 are joined. The outer layer 90 may be a mixture of a chopped fiber and resin that may be spray applied (i.e., spray chop fiber/resin) or may be a sheet molding compound (SMC). The primary reinforcement (i.e., the chopped fibers), may be made of a carbon fiber, a glass fiber or a aramid fiber of about one (1) inch in length (2.5 cm). The resin for binding the chopped fibers may include epoxy, vinyl ester and other resin systems that may be nano-enhanced.

The pressure vessel assembly 20 may further include a plurality of junctions 92 with each junction located where respective ends of the outer walls 60, 72, 78, ends of the sidewalls 68, 70, and ends of interior walls 62 generally meet. Each junction 92 may generally be Y-shaped (i.e., a three pointed star) and may be made of the same material as the outer layer 90.

Because of the use of the continuous fiber in the mid-layers 84, 86, 88, the vessel assembly 20 weight is much lighter than if the entire assembly were made with a chopped fiber. However, the internal structural sidewalls 68, 70 and internal walls 62 have different mechanical properties from the outer walls 60, 72, 78 with the hybrid of continuous fiber and chopped fiber. The internal structural sidewalls 68, 70 and internal walls 62 will have a higher modulus of elasticity than the hybrid outer walls 60, 72, 78, and therefore the junctions 92 will require an optimized angle that is different from about one-hundred and twenty (120) degrees that would typically be derived from homogeneous materials. The junction 92 angle and the internal wall thickness will be optimized based on specific material properties.

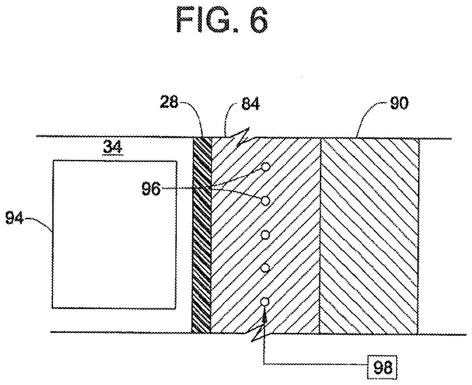

Referring to FIGS. 5 and 6, the pressure vessel assembly 20 may further include an absorbent 94 (i.e., gas absorbent media) located in one or all of the chambers 34, 36, 38. The absorbent 94 functions to supplement the gas storage capacity of the pressure vessel assembly 20. The absorbent 94 may be in granular or pellet form, or may be formed into any desirable shape. Non-limiting examples of absorbents 94 may depend, at least in-part, on the type of gas being stored. For example, if the gas is hydrogen, the absorbent 94 may include metal organic frameworks, active carbon, metal hydrides, carbon nano tubes, and others. If the gas is CNG, the absorbent 94 may include activated carbon, metal organic frameworks, and others.

The pressure vessel assembly 20 may also include a heating element 96 adaptable to heat the absorbent 94 for improved extraction of the fluid or gas therefrom. The heating element 96 isbe embedded in the mid layer 84. Moreover, each chamber 34, 36, 38 may contain an absorbent 94 and a separate heating element 96 may be embedded in each mid-layer 84, 86, 88. It is further contemplated and understood, that one heating element 96 may heat the absorbent(s) 94 located in all three chambers 34, 36 38, and the single heating element may generally be embedded in the outer layer 90. In yet another embodiment, one or more heating elements 96 may be disposed and embedded between the mid-layers 84, 86, 88 and the outer layer 90.

Non-limiting examples of the heating element 96 include devices configured to convert electrical energy to thermal energyIn the above mentioned example where the polymer matrix composite of the mid-layers 84, 86, 88 includes a continuous carbon fiber reinforcement, the carbon fiber itself may serve as a portion of an electrical circuit that emits thermal energy. The heating element type may be based on desired characteristics such as weight, heating efficiency and cost.

In another embodiment, the composite material of the mid-layers 84, 86, 88 and/or the outer layer 90 may include a glass fiber for structural reinforcement, and which also functions as an electrical insulation. Moreover, the heating element 96 may also function as part of a vessel structural health monitoring system 98 capable of detecting, for example, any discontinuity or breakage of the heating elements 96.

The heating elements 96 may be embedded in the mid-layers 84, 86, 88 during the manufacturing process of the pressure vessel assembly 20. The heating elements 96 may be placed at an optimal depth within the layers 84, 86, 88 to maximize heating efficiency and minimize the heating element electrical load.

The composite pressure vessel assembly 20 may provide a lightweight storage tank with a high energy storage density. The approach enables the easy addition of reinforcing composite material where needed (e.g. junctions 92). The use of the hybrid continuous and short fiber may further minimize the vessel assembly weight. Because the vessel assembly 20 may be in a non-cylindrical shape, the assembly will provide the highest conformability to a given space. Moreover, the composite construction will also provide corrosion resistance compared to metallic tanks.

The integrated heating elements 96 in the composite material with the absorbent 94 will maximize the gas usage in all weather conditions. The present disclosure provides a simplified and cost effective approach in integrating heating elements 96 and associated terminals into the composite pressure vessel assembly 20 during the manufacturing process.

## Claims

1. A pressure vessel assembly (20) comprising:
a first composite layer (84) surrounding at least one chamber (34); and
a first heating element (96) embedded in the first composite layer (84);
a first absorbent (94) disposed in at least one of the at least one chamber (34);
a first liner (28) defining a first chamber (34) of the at least one chamber, and wherein the first liner (28) is encompassed by the first composite layer (84).
wherein the first composite layer (84) comprises continuous carbon fibers, and the heating element (96) includes the continuous carbon fibers;
wherein the continuous carbon fibers are a portion of an electrical circuit of the assembly that is configured to emit thermal energy; and
wherein the continuous carbon fibers are wrapped about lobes and end caps of the first liner (28).

2. The pressure vessel assembly (20) set forth in claim 1, wherein the first composite layer (84) comprises a polymer matrix composite.

3. The pressure vessel assembly (20) set forth in claim 1, wherein the first heating element (96) is selected from the group comprising metal wire, copper foil and carbon nano tubes.

4. The pressure vessel assembly (20) set forth in claim 1, wherein the pressure vessel assembly (20) is configured to store natural gas and the first heating element (96) is configured to heat the absorbent to extract the natural gas.

5. The pressure vessel assembly (20) set forth in claim 1, wherein the first liner (28) is selected from the group comprising blow molded plastic and injection molded plastic.

6. The pressure vessel assembly (20) set forth in claim 1 further comprising:
a second liner (30) defining a second chamber (36) of the at least one chamber, and wherein the first and second liners are encompassed by the first composite layer (84).

7. The pressure vessel assembly (20) set forth in claim 1 further comprising:
a second liner (30) defining a second chamber of the at least one chamber; and
a second composite layer (86) joined with and enveloping the second liner (30), and wherein the first liner (28) is joined and enveloped by the first composite layer (84), and portions of the first and second composite layers are joined.

8. The pressure vessel assembly (20) set forth in claim 7 further comprising:
a second heating element embedded in the second composite layer (86).

9. The pressure vessel assembly set (20) forth in claim 8 further comprising:
a third composite layer (88) joined with and enveloping the first and second composite layers.

10. The pressure vessel assembly (20) set forth in claim 6 further comprising:
a second absorbent disposed in the second chamber.

11. The pressure vessel assembly (20) set forth in claim 9 further comprising:
a second absorbent disposed in the second chamber.

12. The pressure vessel assembly (20) set forth in claim 9, wherein the third composite layer comprises a glass fiber.

## Patentansprüche

1. Druckbehälterbaugruppe (20), umfassend:
eine erste Verbundschicht (84), die mindestens eine Kammer (34) umgibt; und
ein erstes Heizelement (96), das in der ersten Verbundschicht (84) eingebettet ist;
ein erstes Absorptionsmittel (94), das in mindestens einer der mindestens einen Kammer (34) angeordnet ist;
eine erste Auskleidung (28), die eine erste Kammer (34) der mindestens einen Kammer definiert, und wobei die erste Auskleidung (28) von der ersten Verbundschicht (84) umgeben ist;
wobei die erste Verbundschicht (84) Endloskohlenstofffasern umfasst und das Heizelement (96) die Endloskohlenstofffasern beinhaltet;
wobei die Endloskohlenstofffasern ein Abschnitt eines elektrischen Schaltkreises der Baugruppe sind, der dazu konfiguriert ist, Wärmeenergie zu emittieren; und
wobei die Endloskohlenstofffasern um Lappen und Endkappen der ersten Auskleidung (28) gewickelt sind.

2. Druckbehälterbaugruppe (20) nach Anspruch 1, wobei die erste Verbundschicht (84) einen Polymermatrix-Verbundwerkstoff umfasst.

3. Druckbehälterbaugruppe (20) nach Anspruch 1, wobei das erste Heizelement (96) aus der Gruppe umfassend Metalldraht, Kupferfolie und Kohlenstoffnanoröhren ausgewählt ist.

4. Druckbehälterbaugruppe (20) nach Anspruch 1, wobei die Druckbehälterbaugruppe (20) dazu konfiguriert ist, Erdgas zu speichern, und das erste Heizelement (96) dazu konfiguriert ist, das Absorptionsmittel zu erhitzen, um das Erdgas zu extrahieren.

5. Druckbehälterbaugruppe (20) nach Anspruch 1, wobei die erste Auskleidung (28) aus der Gruppe umfassend blasgeformten Kunststoff und spritzgegossenen Kunststoff ausgewählt ist.

6. Druckbehälterbaugruppe (20) nach Anspruch 1, ferner umfassend:
eine zweite Auskleidung (30), die eine zweite Kammer (36) der mindestens einen Kammer definiert, und wobei die erste und die zweite Auskleidung von der ersten Verbundschicht (84) umgeben sind.

7. Druckbehälterbaugruppe (20) nach Anspruch 1, ferner umfassend:
eine zweite Auskleidung (30), die eine zweite Kammer der mindestens einen Kammer definiert; und
eine zweite Verbundschicht (86), die mit der zweiten Auskleidung (30) verbunden ist und diese umhüllt, und wobei die erste Auskleidung (28) mit der ersten Verbundschicht (84) verbunden und durch diese umhüllt ist, und Abschnitte der ersten und zweiten Verbundschicht verbunden sind.

8. Druckbehälterbaugruppe (20) nach Anspruch 7, ferner umfassend:
ein zweites Heizelement, das in der zweiten Verbundschicht (86) eingebettet ist.

9. Druckbehälterbaugruppe (20) nach Anspruch 8, ferner umfassend:
eine dritte Faserverbundschicht (88), die mir der ersten und
der zweiten Faserverbundschicht verbunden ist und diese umhüllt.

10. Druckbehälterbaugruppe (20) nach Anspruch 6, ferner umfassend:
ein zweites Absorptionsmittel, das in der zweiten Kammer angeordnet ist.

11. Druckbehälterbaugruppe (20) nach Anspruch 9, ferner umfassend:
ein zweites Absorptionsmittel, das in der zweiten Kammer angeordnet ist.

12. Druckbehälterbaugruppe (20) nach Anspruch 9, wobei die dritte Verbundschicht eine Glasfaser umfasst.

## Revendications

1. Ensemble récipient sous pression (20) comprenant :
une première couche composite (84) entourant au moins une chambre (34) ; et
un premier élément chauffant (96) intégré dans la première couche composite (84) ;
un premier absorbant (94) disposé dans au moins l'une de l'au moins une chambre (34) ;
une première chemise (28) définissant une première chambre (34) de l'au moins une première chambre, et dans lequel la première chemise (28) est entourée par la première couche composite (84).
dans lequel la première couche composite (84) comprend des fibres de carbone continues, et l'élément chauffant (96) comporte les fibres de carbone continues ;
dans lequel les fibres de carbone continues constituent une partie d'un circuit électrique de l'ensemble qui est configuré pour émettre de l'énergie thermique ; et
dans lequel les fibres de carbone continues sont enroulées autour de lobes et d'embouts de la première chemise (28).

2. Ensemble récipient sous pression (20) selon la revendication 1, dans lequel la première couche composite (84) comprend un composite à matrice polymère.

3. Ensemble récipient sous pression (20) selon la revendication 1, dans lequel le premier élément chauffant (96) est choisi dans le groupe comprenant un fil métallique, une feuille de cuivre et des nanotubes de carbone.

4. Ensemble récipient sous pression (20) selon la revendication 1, dans lequel l'ensemble récipient sous pression (20) est configuré pour stocker du gaz naturel et le premier élément chauffant (96) est configuré pour chauffer l'absorbant pour extraire le gaz naturel.

5. Ensemble récipient sous pression (20) selon la revendication 1, dans lequel la première chemise (28) est choisie dans le groupe comprenant du plastique moulé par soufflage et du plastique moulé par injection.

6. Ensemble récipient sous pression (20) selon la revendication 1, comprenant également :
une seconde chemise (30) définissant une seconde chambre (36) de l'au moins une chambre, et dans lequel les première et seconde chemises sont entourées par la première couche composite (84).

7. Ensemble récipient sous pression (20) selon la revendication 1, comprenant également :
une seconde chemise (30) définissant une seconde chambre de l'au moins une chambre ; et
une deuxième couche composite (86) jointe à la seconde chemise (30) et l'enveloppant, et dans lequel la première chemise (28) est jointe et enveloppée par la première couche composite (84), et des parties des première et deuxième couches composites sont jointes.

8. Ensemble récipient sous pression (20) selon la revendication 7, comprenant également :
un second élément chauffant intégré dans la deuxième couche composite (86).

9. Ensemble récipient sous pression (20) selon la revendication 8, comprenant également :
une troisième couche composite (88) jointe aux première et deuxième couches composites et les enveloppant.

10. Ensemble récipient sous pression (20) selon la revendication 6, comprenant également :
un second absorbant disposé dans la seconde chambre.

11. Ensemble récipient sous pression (20) selon la revendication 9, comprenant également :
un second absorbant disposé dans la seconde chambre.

12. Ensemble récipient sous pression (20) selon la revendication 9, dans lequel la troisième couche composite comprend une fibre de verre.
